# EUROPEAN PATENT APPLICATION

(11) **EP 1 081 405 A2**
(43) Date of publication of application: **07.03.2001**
(21) Application number: 00307621.3
(22) Date of filing: 04.09.2000
(51) Int. Cl.: F16D 55/36

(54) **Brake**

(30) Priority: 04.09.1999 GB 9920826
(71) Applicant: Lucas Industries Limited, West Midlands B90 4LA (GB)
(72) Inventor: Holman, David John, Wolverhampton, WV10 6DW (GB); Walton, Andrew, Knowle, Solihull, B93 9JX (GB)
(74) Representative: Pople, Joanne Selina

(57) **Abstract**

A brake suitable for use in aerospace applications comprises a first brake arrangement (18) which is actuable to apply a braking load to a trip member (15). The brake also comprises a second brake arrangement (33) and an actuator (25, 26, 27, 27a) for the second brake arrangement which is operable in response to the application of a braking load to the trip member (15). The actuator for the second brake arrangement may comprise a ball/ramp actuator (27, 27a) operable, upon the application of the braking load to the trip member (15), to apply a compressive load to the second brake arrangement (33).

## Description

This invention relates to a brake, and in particular to a brake suitable for use in aerospace applications, for example for applying a braking load to a drive shaft used to drive aircraft flaps.

In aircraft flap drive arrangements, it is desirable to be able to produce a high braking torque to stop the drive shaft in a very short period of time, for example to produce a high braking torque of the order of 135 Nm in 55 ms. In order to control the operation of such arrangements electromagnetically, it has been necessary to provide a powerful actuator, which is undesirably large and heavy.

According to the present invention there is provided a brake suitable for use in aerospace applications comprising a first brake arrangement which is actuable to apply a braking load to a trip member, a second brake arrangement, and an actuator for the second brake arrangement operable in response to the application of a braking load to the trip member.

The actuator for the second brake arrangement conveniently comprises a ball/ramp actuator operable, upon the application of the braking load to the trip member, to apply a compressive load to the second brake arrangement.

The second braking arrangement conveniently comprises a plurality of brake elements, some of which are rotatable with a drive shaft and others of which are non-rotatably fixed to a housing. It will be appreciated that the application of a compressive load to the second brake arrangement applies a braking load to the drive shaft.

The drive shaft may be provided with means for transmitting the compressive load applied to the second brake arrangement to the drive shaft. For example, the compressive load applied to the second brake arrangement may be transmitted to the drive shaft through a C-washer or a circlip keyed to the drive shaft.

The trip member is preferably rotatable with the drive shaft when the first brake arrangement is deactivated, activation of the first brake arrangement applying the braking load to the trip member to retard movement of the trip member.

The first brake arrangement conveniently comprises a plurality of further brake elements, some of which are rotatable with the trip member, others of which are fixed to a first housing. The first brake arrangement may further comprise control means for controlling the magnitude of the further compressive load applied to the further brake elements.

The control means may comprise spring means arranged to apply the further compressive load to the further brake elements and an electromagnetic actuator operable to counter the action of the spring means. The spring means may comprise one or more springs.

In one embodiment of the invention, the drive shaft is arranged within the first housing, the electromagnetic actuator being mounted externally to the first housing. The electromagnetic actuator may comprise a lever arrangement which is operable to vary the further compressive load applied to the further brake elements. The electromagnetic actuator may comprise an electromagnetic controller which is arranged within a second housing mounted externally to the first housing.

Preferably, the lever arrangement comprises a lever which cooperates with a moveable load transmitting member, a surface of the load transmitting member being in abutment with the one or more springs.

In an alternative embodiment of the invention, the first brake arrangement may comprise a chamber containing a magneto-rheological fluid, a region, for example a surface, associated with the trip member being exposed to the fluid such that, upon varying the magnitude of the magnetic field applied to the fluid, the magnitude of a braking load applied to the region by the fluid is varied. The magnitude of the applied magnetic field is conveniently controlled by varying the current applied to a winding.

The invention is advantageous in that the application of a relatively small force to the first brake arrangement, requiring the provision of only a relatively small control means, is sufficient to apply the braking load to the trip member which, in turn, causes operation of the second brake arrangement to apply a large braking force to the drive shaft.

The actuator is conveniently arranged such that upon removal of the braking load to the trip member, the actuator resets to a condition in which the second brake arrangement does not apply a significant braking load.

The invention will further be described, by way of example, with reference to the accompanying drawings, in which:-
Figure 1 is a sectional view illustrating a brake in accordance with an embodiment of the invention;
Figure 2 is a sectional view illustrating part of the actuator of the embodiment of Figure 1;
Figure 3 is a view, part in section, illustrating a brake in accordance with an alternative embodiment of the invention;
Figure 4 is a sectional view, along line A-A, illustrating a part of the brake shown in Figure 3;
Figure 5 is a sectional end view of a part of the actuator forming part of the brake in Figures 3 and 4; and
Figure 6 is a sectional view illustrating part of a brake in accordance with a further alternative embodiment of the invention.

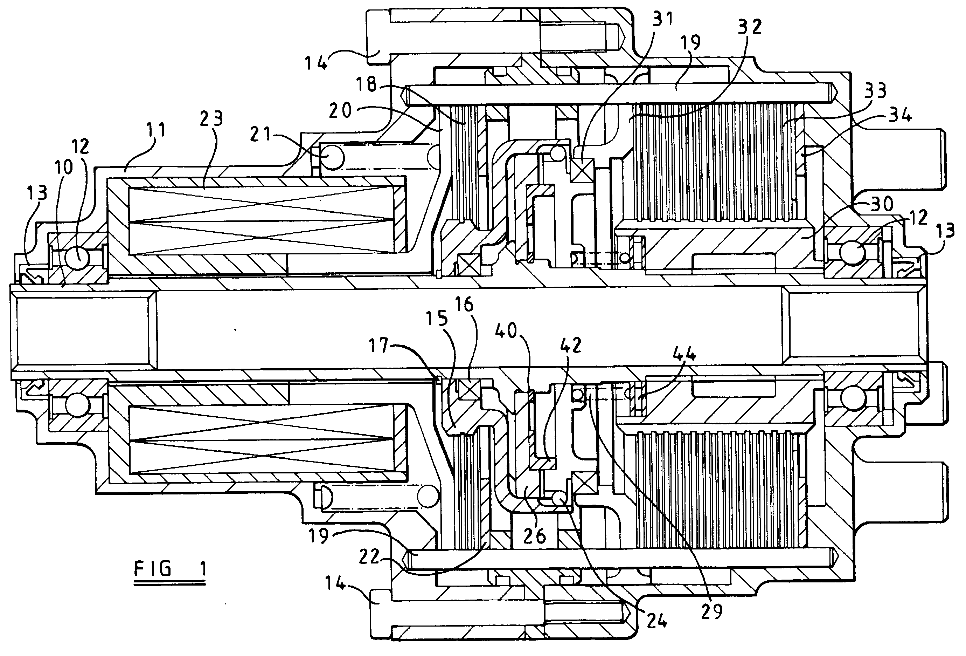

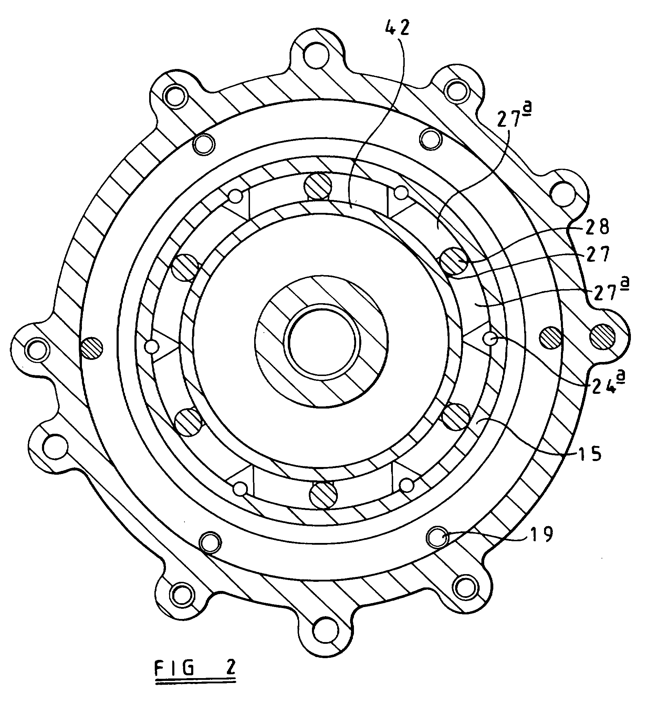

The brake illustrated in Figures 1 and 2 is intended for use in applying a braking load to a drive shaft 10 to slow down and subsequently stop rotation of the drive shaft 10. The drive shaft 10 forms, in use, part of a drive shaft interconnecting a motor and one or more rotary actuators for use in driving aircraft flight control flaps or slats between, for example, extended and retracted positions. It will be appreciated, however, that the brake may be used in other applications.

As illustrated in Figure 1, the drive shaft 10 is supported for rotation within a housing 1 by means of bearings 12. Seals 13 are provided between the housing 11 and the drive shaft 10. As illustrated in Figure 1, the housing 11 is of multi-part form, the parts of the housing 11 being secured to one another by means of bolts 14.

A trip member 15 is located within the housing 11, the trip member 15 being supported through bearings 16 by the drive shaft 10, the bearings 16 permitting angular movement of the trip member 15 relative to the drive shaft 10. A circlip 17 is mounted in a groove formed in the drive shaft 10 and arranged to abut a surface of the trip member 15 such that axial movement of the trip member 15 along the drive shaft 10 is restricted.

A first brake arrangement is associated with the trip member 15 to permit the application of a braking load to the trip member 15. The first brake arrangement comprises a plurality of brake elements in the form of annular brake discs 18. Alternate ones of the discs 18 are secured to the trip member 15 in such a manner that the brake discs 18 are rotatable with the trip member 15 and are axially moveable through a small distance relative to the trip member 15. The remaining brake discs 18 are held in such a manner that they are fixed against angular movement relative to the housing 11. This is achieved by means of the discs 18 engaging pins 19 located within and secured to the housing 11. The left-hand most one of the discs 18, in the orientation illustrated in Figure 1, is engageable with a surface of a load transmitting member 20 which is biased by means of a spring 21 towards a position in which the discs 18 are compressed between the load transmitting member 20 and an abutment member 22 which is secured within the housing 11. It will be appreciated that the action of the spring 21 applies a compressive load to the discs 18, and that the friction between the discs when the compressive load is applied results in the application of a braking load to the trip member 15.

The load transmitting member 20 forms an armature which is moveable under the influence of an electromagnetic controller 23 located within the housing 11. The controller 23 is arranged such that when energized the load transmitting member 20 is moved against the action of the spring 21, thereby reducing the magnitude of the compressive load applied to the discs 18 and reducing the magnitude of the braking load applied to the trip member 15. The controller 23 conveniently includes two separate windings arranged such that, in the event of failure of one of the windings, energization of the other of the windings will be sufficient to move the load transmitting member 20 against the action of the spring 21.

The trip member 15 includes a region defining an annular wall which is coupled through bearing arrangements 24 with a first member 25 of an actuator for use in controlling the operation of a second brake arrangement. The bearing arrangements 24 are arranged to transmit drive to the trip member 15 and to permit limited axial movement of the first member 25 relative to the trip member 15 but to prevent or restrict angular movement between these components. As illustrated in Figure 2, each bearing arrangement 24 comprises a spherical bearing member 24a located and slidable within a corresponding recess formed in the annular part of the trip member 15, the bearing member 24a being received within a corresponding recess formed in the outer periphery of the first member 25.

The actuator further comprises a second member 26 which is secured to and rotatable with the drive shaft 10, the second member 26 being restricted against axial movement by means of a circlip 40. The first member 25 is provided with a plurality of recesses 27 within which spherical drive members 28 are located, each drive member 28 also being located within a similar recess provided in the second member 26. The drive members 28 are constrained against moving outwards under centrifugal forces by the internal surface of the trip member 15 and against moving inwards by a flanged support plate member 42. A spring 29 is provided between the first member 25 and a carrier member 30 which is splined to the drive shaft 10 to rotate therewith, the spring 29 applying a biasing force to the first member 25 urging the first member 25 towards the second member 26, retaining the drive members 28 within the recesses 27. An arrangement of roller bearings 44 are arranged between the spring 29 and the carrier 30 to allow a differential speed of rotation between the first member 25 and the carrier member 30 during operation of the brake. Ramped surfaces 27a are provided adjacent each recess 27 such that, in the event that relative angular movement occurs between the first and second members 25, 26, the drive members 28 ride out of the recesses 27 and along the ramped surfaces 27a urging the first member 25 away from the second member 26. It will be appreciated, therefore, that the actuator comprises a ball/ramp type actuator.

The first member 25 is connected through bearings 31 with a load transmitting member 32, the load transmitting member 32 being engageable with an end one of a plurality of annular brake discs 33 forming a second brake arrangement. The discs 33 are arranged such that alternate ones of the discs are secured to the pins 19, and thus are held against rotation relative to the housing 11, the remaining ones of the discs 33 being keyed to the carrier member 30 in such a manner that they are rotatable with the carrier member 30 and hence the drive shaft 10, and are free to move through a limited distance axially relative to the carrier member 30. The end most one of the brake discs 33 remote from the load transmitting member 32 is engageable with an abutment or stop 34 located within the housing 11.

In normal use, when the brake is to be de-activated, the controller 23 is energized to hold the load transmitting member 20 against the action of the spring 21 thus ensuring that the compressive load is substantially removed. As a result, rotation of the drive shaft 10 is transmitted to the trip member 15 via the second member 26, the spherical drive members 28, the first member 25 and the bearing arrangement 24, the magnitude of a braking load applied by the brake elements 18 to the trip member 15 being substantially zero. Thus, the trip member 15 is rotated at substantially the same speed as the drive shaft 10. As the second member 26 is driven by the drive shaft 10, it will be appreciated that the first and second members 25, 26 of the actuator rotate at the same speed, holding the spherical drive elements 28 within their respective recesses 27. In this position, the first and second members 25, 26 are spaced apart from one another axially by only a small distance, and the load transmitting member 32 is held by the spring 29 in a position in which the magnitude of a compressive load applied to the brake discs 33 is substantially zero, thus the magnitude of a braking load applied to the drive shaft 10 is also substantially zero.

When a braking force is to be applied to the drive shaft 10, the controller 23 is de-energized and the action of the spring 21 causes the load transmitting member 20 to move towards a position in which the brake discs 18 are compressed between the load transmitting member 20 and the abutment member 22. Such compression retards the trip member 15 so that the trip member 15 rotates at a speed lower than the speed of rotation of the drive shaft 10. The reduced speed of rotation of the trip member 15 is transmitted to the first member 25, and as the second member 26 rotates with the drive shaft 10, it will be appreciated that relative angular movement occurs between the first and second members 25, 26. Such movement results in the spherical drive members 28 riding out of the recesses 27 and up the ramped surfaces 27a located adjacent the recesses 27. Such movement of the drive members 28 out of the recesses 27 and up the ramped surfaces 27a forces the first member 25 to move axially away from the second member 26. Such movement is against the action of the spring 29. The movement of the first member 25 is transmitted through the load transmitting member 32 to apply a compressive load to the brake discs 33, the compressive load resulting in the application of a braking load or torque to the drive shaft 10.

In the embodiment illustrated in Figure 2, the ramped surfaces 27a are symmetrical on each side of the drive members 28, thereby allowing the brake to have a substantially identical operating characteristic in both directions of rotation. It will be appreciated, however, that the ramped surfaces 27a may be formed with non-identical angles of inclination on each side of the drive members 28 in order to permit a different operating characteristic for different directions of rotation.

It will be appreciated that the magnitude of the force which must be applied by the controller 23 to maintain the brake in an inoperative position need only be sufficient to overcome the action of the spring 21. As a result, an electromagnetic controller of relatively low size and weight can be used whilst permitting the drive shaft 10 to be slowed and stopped within an acceptably short period of time.

Once the drive shaft 10 has been stopped, if the controller 23 is re-energized to remove the braking load from the trip member 15, the action of the spring 29 can urge the first member 25 towards the position illustrated. Such movement will cause slight angular movement of the first member 25 relative to the second member 26, such angular movement returning the drive members 28 into the recesses 27. Once the first member 25 has been returned to the position illustrated, it will be appreciated that substantially no braking load is being applied to the drive shaft 10, and that the brake is reset ready for operation, as necessary, to apply a braking load to the drive shaft 10.

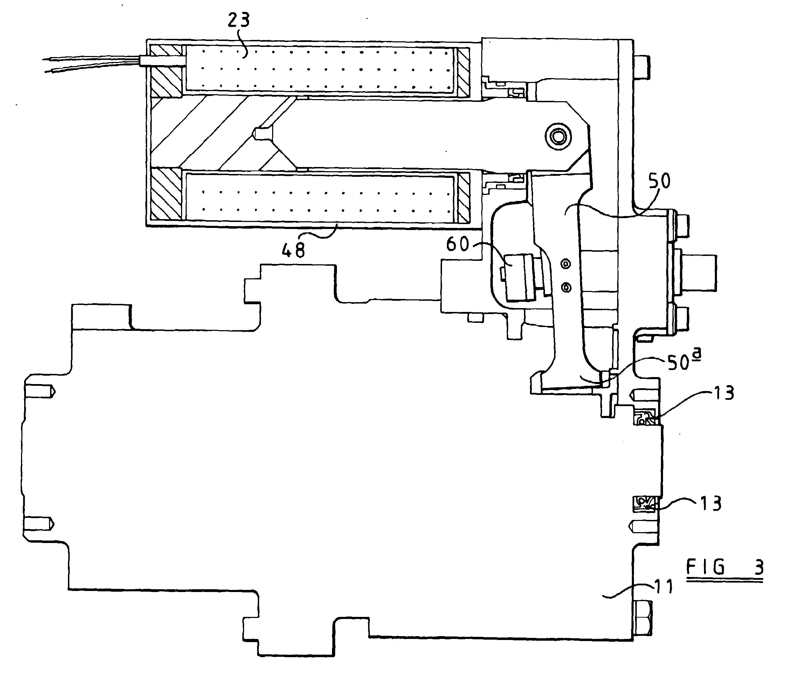

With reference to Figures 3 to 5, there is shown an alternative embodiment of the invention in which similar parts to those shown in Figures 1 and 2 are denoted with like reference numerals. As can be seen most clearly in Figure 3, the electromagnetic controller 23 is not located within the housing 11 for the drive shaft 10, but is arranged within a further housing 48 mounted externally to the housing 11. Conveniently, the further housing 48 is secured or connected to the housing 11 by means of bolts.

A surface of the load transmitting member 20 is biased by means of a spring force towards a position in which the brake discs 18 are compressed between the load transmitting member 20 and the abutment member 22. The spring force is provided by first and second springs 21a, 21b, rather than just a single spring, each of the first and second springs 21a, 21b itself providing a sufficient force to urge the brake discs 18 towards the compressed position in the event that the other of the springs fails. One end of each spring 21a, 21b is in abutment with a surface of the load transmitting member 20, the other end of each spring 21a, 21b being in abutment with a further abutment member 49.

The carrier member 30 in the arrangement shown in Figures 1 and 2 is removed and the discs 33 are arranged such that alternate ones are keyed directly to the drive shaft 10 such that they are rotatable with the drive shaft 10, the remaining discs being secured to a pin 19a such that they are held against rotation relative to the housing 11. A roller thrust bearing arrangement 44a is provided between the spring 29 and the first member 25 to allow a differential speed of rotation between the first member 25 and the drive shaft 10 during operation of the brake. As described previously with reference to Figures 1 and 2, an abutment member 34 is provided with which an end one of the discs 33 is in engagement. The abutment member 34 is in engagement with a further load transmitting member 46, the further load transmitting member 46 transmitting the load applied to the brake discs 33 to a C-washer 47 which is keyed to the drive shaft 10. The provision of the C-washer 47 provides the advantage that the load is applied to the drive shaft 10, rather than being applied to the housing 11. Alternatively, a circlip may be provided in place of the C-washer 47 for the same purpose.

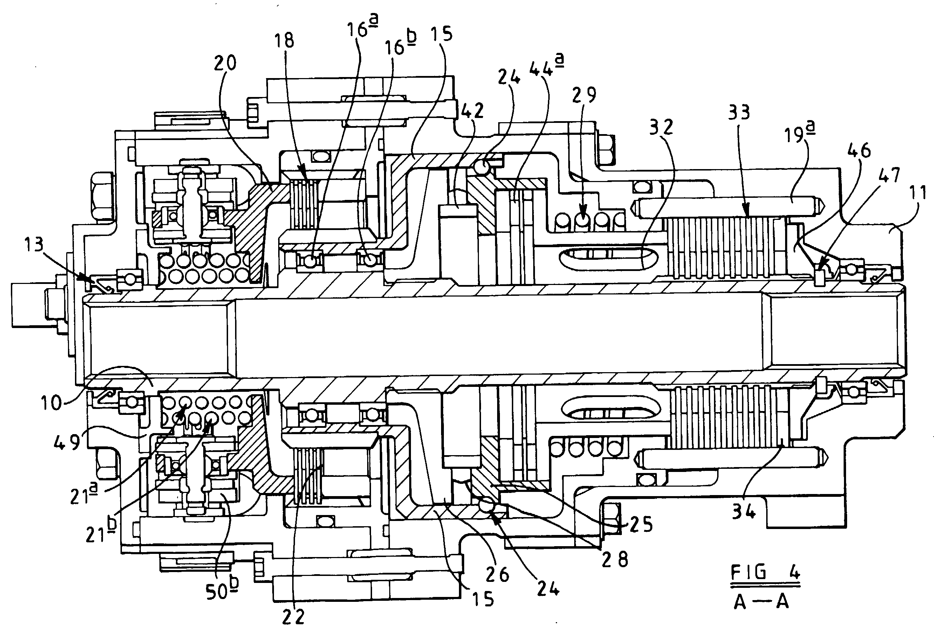

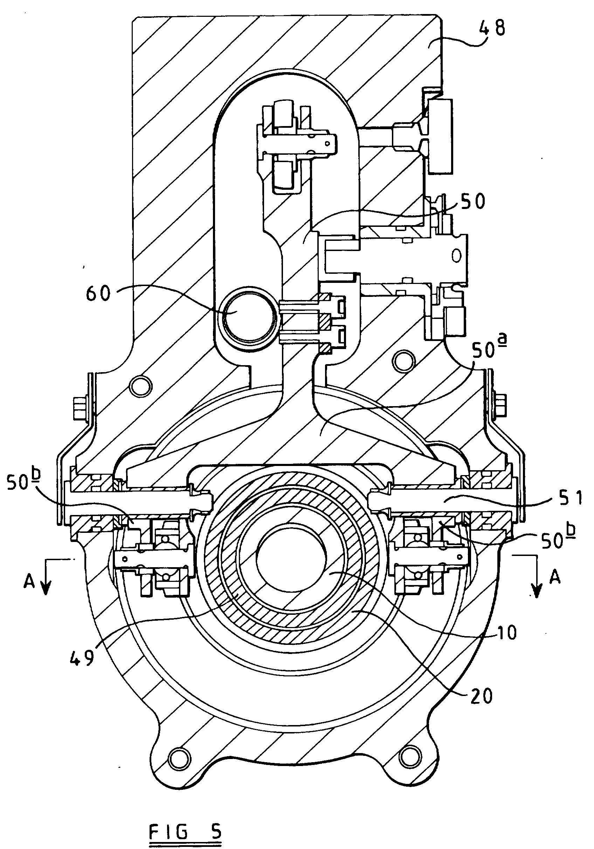

The electromagnetic controller 23 is operable to control movement of a lever 50 which is pivotable about a fulcrum 51. As can be seen most clearly in Figures 4 and 5, the lever 50 includes an anvil region 50a provided with bifurcated regions 50b which are cooperable with the load transmitting member 20 to cause movement thereof so as to vary the compressive load applied to the brake discs 18 upon pivotal movement of the lever 50. A position sensor 60 is provided to monitor the position of the lever 50. In aerospace applications, the position sensor 60 is preferably arranged to provide a signal to a computer processor or other control unit associated with the aircraft to indicate the operational state of the actuator.

The arrangement in Figures 3 to 5 operates is a similar manner to that shown in Figures 1 and 2 such that when the brake is to be deactivated, energisation of the controller 23 causes the lever 50 to pivot about the fulcrum 51, thereby causing the load transmitting member 20 to be held against the action of first and second springs 21a, 21b to remove the compressive load applied to the brake discs 18. The magnitude of the braking load applied by the brake discs 18 to the trip member 15 is therefore substantially zero. The first and second members 25, 26 of the actuator can therefore rotate at the same speed, the spherical drive members 28 (partially shown in Figure 4) are retained within their respective recesses (not shown), and the load transmitting member 32 is held by the spring 29 in a position in which the magnitude of the compressive load applied to the brake discs 33 is substantially zero. The magnitude of the braking load applied to the drive shaft 10 is also therefore substantially zero.

When a braking force is to be applied to the drive shaft 10, the controller 23 is de-energized so as to cause the lever 50 to move the load transmitting member 20 towards a position in which the brakes discs 18 are compressed between the load transmitting member 20 and the abutment member 22. As described previously, such compression retards the trip member 15, causing relative angular movement between the first and second members 26. The spherical drive members are therefore caused to ride out of their recesses 27, thereby forcing the first member 25 to move axially relative to the second member 26 against the action of the spring 29. The movement of the first member 25 is transmitted through the load transmitting member 32 to apply a compressive load to the brake discs 33, the compressive load resulting in the application of a braking load or torque to the drive shaft 10.

It will be appreciated that the housing parts 11, 48 need not be separate housing parts, and movement of the load transmitting member 20 may be controlled by means of the lever arrangement 50, 50a, 50b and an electromagnetic controller 23 housed within an integrally formed housing.

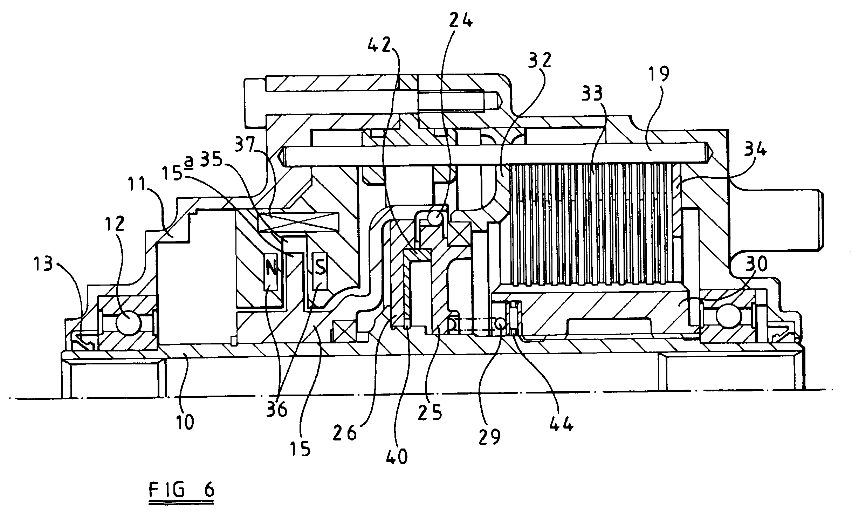

The arrangement illustrated in Figure 6 is, for the most part, identical to the arrangement described with reference to Figures 1 and 2, and only the differences between the arrangement will be described. In the arrangement of Figure 6, like references are used to denote parts which are similar to those of Figures 1 and 2.

In the arrangement of Figure 6, the first brake arrangement does not include a plurality of brake discs, but rather includes an outwardly extending flange 15a of the trip member 15 located within a recess formed in a housing part which defines a chamber 35. The chamber 35 is filled with a magneto-rheological fluid. One or more permanent magnets 36 are located within the housing part to apply a magnetic field to the magneto-rheological fluid such that under rest conditions, the fluid is relatively viscous, and in the event that the trip member 15 is rotating, the viscosity of the fluid will apply a braking load to the trip member 15. The housing part is further provided with a controller in the form of a winding 37 which is operable to apply a magnetic field to the fluid within the chamber 15, the magnetic field applied by the winding 37, in use, opposing that applied by the permanent magnets 36.

In normal use, when substantially no braking load is to be applied to the drive shaft 10, the winding 37 is energized such that the magnetic field applied to the fluid within the chamber 35 is such that the fluid is of relatively low viscosity. Rotation of the trip member 15 with the drive shaft 10 is not significantly impeded by the fluid within the chamber 35, thus the trip member 15 rotates at substantially the same speed as the drive shaft 10. As described with reference to the embodiment of Figures 1 and 2, in such circumstances the second brake arrangement operates in such a manner that substantially no braking force is applied to the drive shaft 10.

When a braking force is to be applied to the drive shaft 10, the winding 37 is de-energized, and the magnetic field applied by the permanent magnets 36 results in the magneto-rheological fluid being of relatively high viscosity. The viscosity of the fluid is such as to oppose rotation of the trip member 15, thus a braking force is applied to the trip member 15 resulting in rotation of the trip member 15 being retarded compared to that of the drive shaft 10. The application of the braking force to the trip member results in operation of the actuator to increase the magnitude of a compressive load applied to the brake discs 33 of the second brake arrangement as described hereinbefore, and thus results in the application of a large magnitude braking force to the drive shaft 10.

Although the total retarding force available from the magneto-rheological fluid brake may not be of as great a magnitude as that which is obtained from a conventional disc brake assembly, the very high speed of transition from low to high viscosity of the fluid results in a faster deceleration of the trip member 15 and a more forceful separation of the first and second members 25,26.

As described hereinbefore, when the braking force applied to the drive shaft 10 is to be removed, the winding 37 is re-energized to reduce the overall magnitude of the magnetic field applied to the magneto-rheological fluid, reducing the viscosity of the fluid such that the trip member 15 is free to rotate with the drive shaft 10.

Although in the arrangement illustrated in Figure 6 the trip member 15 is provided with a single outwardly extending flange 15a projecting into the chamber 35, it will be appreciated that, if desired, several such flanges and chambers could be provided, thereby increasing the magnitude of a braking force which can be applied to the trip member 15, in use.

## Claims

1. A brake suitable for use in aerospace applications comprising a first brake arrangement (18) which is actuable to apply a braking load to a trip member (15), a second brake arrangement (33), and an actuator (25, 26, 27, 27a) for the second brake arrangement operable in response to the application of the braking load to the trip member (15).

2. The brake as claimed in Claim 1, wherein the actuator for the second brake arrangement comprises a ball/ramp actuator (27, 27a) operable, upon the application of the braking load to the trip member (15), to apply a compressive load to the second brake arrangement (33).

3. The brake as claimed in Claim 2, wherein the second braking arrangement comprises a plurality of brake elements (33), some of which are rotatable with a drive shaft (10) and others of which are non-rotatably fixed to a first housing (11).

4. The brake as claimed in Claim 2 or Claim 3, wherein the drive shaft (10) is provided with means (47) for transmitting the compressive load applied to the second brake arrangement (33) to the drive shaft (10).

5. The brake as claimed in any of Claims 1 to 4, wherein the trip member (15) is arranged to be rotatable with the drive shaft (10) when the first brake arrangement (18) is deactivated, activation of the first brake arrangement (18) applying a braking load to the trip member (15) to retard movement of the trip member (15).

6. The brake as claimed in any of Claims 1 to 5, wherein the first brake arrangement comprises a plurality of further brake elements (18), some of the further brake elements (18) being rotatable with the trip member (15), others of the further brake elements (18) being fixed to a first housing (11).

7. The brake as claimed in Claim 6, wherein the first brake arrangement further comprises control means (23, 21; 23, 50, 21a, 21b) for controlling the magnitude of a further compressive load applied to the further brake elements (18).

8. The brake as claimed in Claim 7, wherein the control means comprise spring means (21; 21a, 21b) arranged to apply the further compressive load to the further brake elements (18) and an electromagnetic actuator (23; 23, 50, 50a, 50b) operable to counter the action of the spring means (21; 21a, 21b).

9. The brake as claimed in Claim 8, wherein the electromagnetic actuator comprises an electromagnetic controller (23) which is housed within the first housing (11).

10. The brake as claimed in Claim 8, wherein the drive shaft (10) is arranged within the first housing (11), the electromagnetic actuator comprising an electromagnetic controller (23) which is mounted externally to the first housing (11) within a second housing (48).

11. The brake as claimed in Claim 9 or Claim 10, wherein the electromagnetic actuator comprises a lever arrangement (50) which is operable to vary the further compressive load applied to the further brake elements (18).

12. The brake as claimed in Claim 11, wherein the lever arrangement comprises a lever (50) which cooperates with a moveable load transmitting member (20), a surface of the load transmitting member (20) being in abutment with the one or more springs (21a, 21b).

13. The brake as claimed in any of Claims 1 to 5, wherein the first brake arrangement comprises a chamber (35) for containing a magneto-rheological fluid, a region (15a) associated with the trip member (15) being exposed to the fluid within the chamber (35) such that, upon varying the magnitude of a magnetic field applied to the fluid, the magnitude of the braking load applied to the region (15a) by the fluid is varied.

14. The brake as claimed in Claim 13, wherein a surface of the trip member (15) is exposed to the magneto-rheological fluid within the chamber (35).

15. The brake as claimed in Claim 13 or Claim 14, whereby the magnitude of the applied magnetic field is controlled by varying the current applied to a winding.

16. The brake as claimed in any of Claims 1 to 15, wherein the actuator is arranged such that upon removal of the braking load to the trip member (15), the actuator resets to a condition in which the second brake arrangement (33) does not apply a significant braking load.
